# EUROPEAN PATENT SPECIFICATION

(11) **EP 0 687 930 B1**
(45) Date of publication and mention of the grant of the patent: **15.09.2004**
(21) Application number: 95109150.3
(22) Date of filing: 13.06.1995
(51) Int. Cl.: G02B 6/28

(54) **Method for manufacturing optical fiber couplers**
Herstellungsmethode für faseroptische Koppler
Méthode de fabrication de coupleurs à fibres optiques

(30) Priority: 14.06.1994 JP 13167094; 14.06.1994 JP 13166794
(43) Date of publication of application: 20.12.1995
(73) Proprietor: SUMITOMO ELECTRIC INDUSTRIES, LTD., Osaka-shi, Osaka 541 (JP)
(72) Inventor: Sasaoka, Eisuke, c/o Yokohama Works of Sumitomo, Sakae-ku, Yokohama-shi, Kanagawa (JP); Kobayashi, Yuji, c/o Yokohama Works of Sumitomo, Sakae-ku, Yokohama-shi, Kanagawa (JP); Moriya, Tomomi, c/o Yokohama Works of Sumitomo, Sakae-ku, Yokohama-shi, Kanagawa (JP); Ishiguro, Yoichi, c/o Yokohama Works of Sumitomo, Sakae-ku, Yokohama-shi, Kanagawa (JP); Semura, Shigeru, c/o Yokohama Works of Sumitomo, Sakae-ku, Yokohama-shi, Kanagawa (JP)
(74) Representative: Grünecker, Kinkeldey, Stockmair & Schwanhäusser Anwaltssozietät

(56) References cited:
- EP-A- 0 174 014
- EP-A- 0 596 502
- WO-A-88/03660
- US-A- 4 895 423
- PATENT ABSTRACTS OF JAPAN vol. 015, no. 384 (P-1258) 27 September 1991 & JP-A-03 154 010 (SUMITOMO ELECTRIC IND LTD;OTHERS: 01) 2 July 1991

## Description

### BACKGROUND OF THE INVENTION

### 1. Field of the Invention

The present invention relates to a method for manufacturing optical fiber couplers with the features of the preamble of claim 1.

### 2. Description of the Related Art

The following method has been proposed in EP 0596502A1 as a method for manufacturing optical fiber couplers.

A first optical fiber ribbon unit including a plurality of arranged optical fibers therein and a second optical fiber ribbon unit including arranged optical fibers therein as many as the optical fibers of the first optical fiber ribbon unit is used in the method. Respective coatings over a predetermined section in a length direction of the first and second optical fiber ribbon units are removed to expose bare fiber portions of the respective optical fiber ribbon units. Then, while the bare fiber portions of the first and second optical fiber ribbon units are tightly contacted with each other, they are heated and fused each other. After the fusing, the fused portion is heated and elongated to form a plurality of optical couplers.

In the case where a plurality of optical fiber couplers are manufactured collectively in this manner, it is necessary to heat respective bare fiber portions uniformly when the bare fiber portions are heated and fused. However, in an optical fiber ribbon unit, the fiber distances original in the ribbon unit are ordinarily extremely narrow so as to be about 250 µm. Accordingly, in fusing by heating with a gas burner or the like, the flow of gas is disturbed by fibers arranged at small distances, so that there is a problem that it is difficult to heat the fibers uniformly.

### SUMMARY OF THE INVENTION

It is an object of the present invention to provide a method for manufacturing an optical fiber couplers capable of realizing uniform heating in a heating/fusing process using optical fiber ribbon unit and to simultaneously reduce the maximum difference among saturated insertion losses of branch line of optical couplers.

The above object is accomplished by the features of claim 1.

According to the present invention, it is possible to control the heating state by varying the relative positional relationship between a heat source such as a gas burner and optical fibers during the fusing of bare fibers. Accordingly, in a manufacturing method of optical fiber couplers by use of optical fiber ribbon units, there is an effect that it is possible to manufacture collectively optical fiber couplers with uniform characteristics and desired characteristics, wherein in particular the maximum difference among saturated insertion losses of branch line of optical fiber couplers is reduced.

### BRIEF DESCRIPTION OF THE DRAWINGS

In the accompanying drawings;
Fig. 1A is a side view of a schematic structural diagram of an optical fiber coupler manufacturing apparatus used in an embodiment of a manufacturing method of optical fiber couplers according to the present invention;
Fig. 1B is a plan view of the schematic structural diagram shown in Fig. 1A;
Fig. 2 is a sectional view showing the state where optical fibers are set in a bare fiber clamp; and
Fig. 3 is a sectional view showing the state where optical fibers are set in a coated fiber clamp.

### PREFERRED EMBODIMENT OF THE INVENTION

The preferred embodiment of the present invention will be described as follows referring to the accompanying drawings.

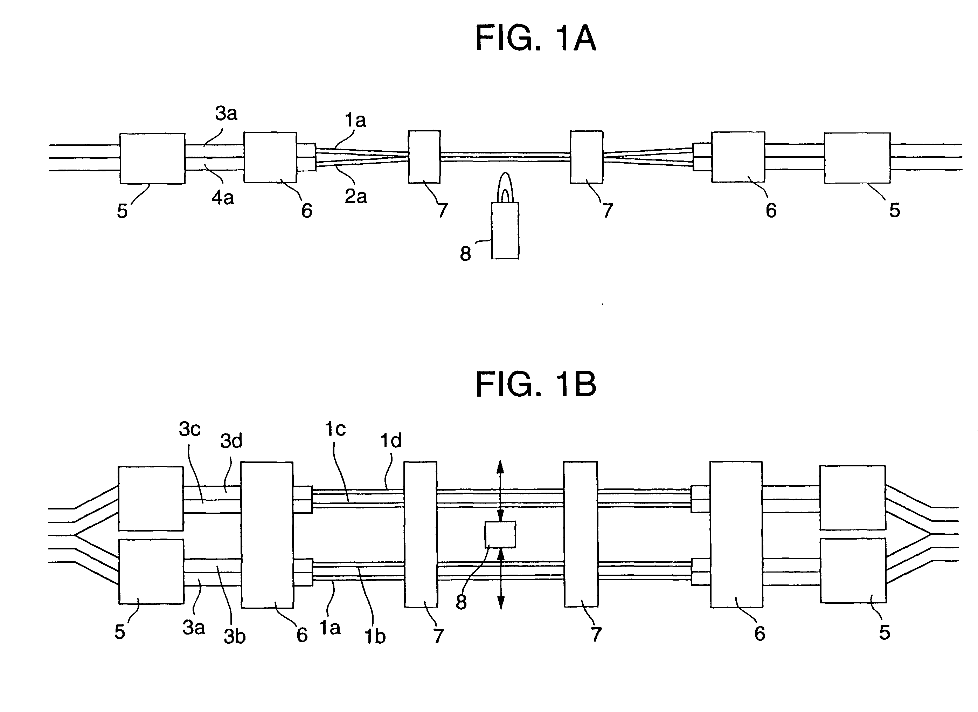

Figs. 1A and 1B are a side view and a plan view of a schematic structural diagram of an optical fiber coupler manufacturing apparatus used in an embodiment of a method for manufacturing optical fiber couplers according to the present invention, respectively. In the drawings, the reference numerals 1a to 1d and 2a to 2d represents bare fiber portions; 3a to 3d and 4a to 4d, coated fiber portions; 5, tension applying clamps; 6, a coated fiber clamp; 7, a bare fiber clamp; and 8, a gas burner. The bare fiber portions 2a to 2d and the coated fiber portions 4a to 4d are under the bare fiber portions 1a to 1d and the coated fiber portions 3a to 3d respectively, therefore not shown in Fig. 1B.

In this embodiment, four optical fiber couplers can be manufactured collectively by use of four-fibers optical fiber ribbon unit which includes four optical fibers therein. Four-fibers optical fiber ribbon unit in which four 1.3µm-band SM optical fibers are arranged to form the four-fibers optical fiber ribbon unit are used by way of example. Two four-fibers optical fiber ribbon units are provided for a main line and a branch line, respectively, and four 3dB couplers for branching light 50% by 50% are manufactured collectively.

Two four-fibers optical fiber ribbon units are laid on each other. First, each of the four-fibers optical fiber ribbon units including four optical fibers therein for a main line and a branch line is separated by two fibers over a region not less than the width of the tension applying clamps 5. That is, one of the optical fiber ribbon units is separated into coated fiber portions 3a, 3b and 3c, 3d, and the other optical fiber ribbon unit is separated into coated fiber portions 4a, 4b and 4c, 4d.

Next, the coating of a center portion of each of the optical fiber ribbon units separated by two fibers is removed over a region not less than the width of the bare fiber clamp 7, so that bare fiber portions are exposed. The bare fiber portions of one of the optical fiber ribbon units are referenced by 1a to 1d, and the bare fiber portions of the other optical fiber ribbon unit are referenced by 2a to 2d. One of the optical fiber ribbon units is used for a main line, and the other optical fiber ribbon unit is used for a branch line. Alternatively, the former may be used for a branch line while the latter is used for a main line.

The coated fiber portions in either side of the two optical fiber ribbon units prepared thus are set in a pair of the tension applying clamps 5. For example, the coated fiber portions 3a, 3b, 4a and 4b are set in one of the tension applying clamps 5, and the coated fiber portions 3c, 3d, 4c and 4d are set in the other tension applying clamp 5, so that the optical fiber ribbon unit for a branch line is positioned in the lower and the optical fiber ribbon unit for a main line is positioned in the upper. Then, a constant tension is given to each of the separated optical fibers.

In this embodiment, the distance between the optical fiber ribbon units separated by two fibers, depending on the tension applying clamp 5. That is, the distance between the centers of the coated fiber portions 3b and 3c (the same as the distance between 4b and 4c) is made 2 mm. In addition, the tension applying clamp on the right is pulled outside by a weight while the tension applying clamp on the left is fixed, so that a tension of 60 gram-weight is given to each of the two-core optical fiber ribbon units.

In this state, each of the coated fiber portions and the bare fiber portions is set in the coated fiber clamp 6 and the bare fiber clamp 7 which are disposed as a pair. The distance between the centers of the bare fiber portions 1b and 1c (the same as the distance between 2b and 2c) is also made 2 mm in the coated fiber clamp 6 and the bare fiber clamp 7.

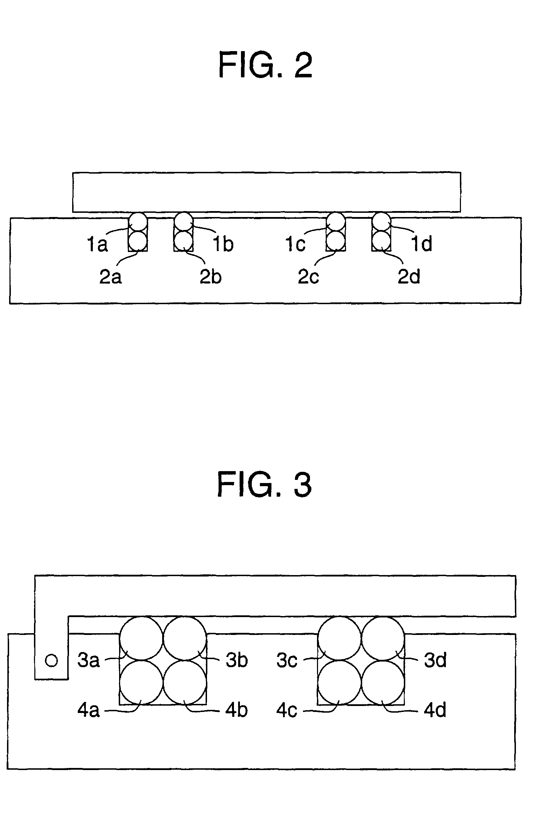

Fig. 2 shows a state where the fibers are set in the bare fiber clamp 7, and Fig. 3 shows a state where the fibers are set in the coated fiber clamp 6. The coated fiber portions 3a to 3d and 4a to 4d are set and brought into tight contact with each other by the coated fiber clamp 6 respectively, and the bare fiber portions 1a to 1d and 2a to 2d are set and brought into tight contact with each other by the bare fiber clamp 7 respectively.

The bare fiber portions of the optical fiber ribbon units thus set are heated and fused by the gas burner 8. The gas burner 8 is reciprocated in the direction intersecting the bare fiber portions at the time of heating, so as to perform fusing. Mixed gas of propane and oxygen is used as the gas supplied to the gas burner 8. The gas burner is reciprocated between the points 4 mm away from an origin, which is the middle point of the second and third bare fiber portions 1b and 1c (the same as that of 2b and 2c), forward (on the side of the bare fiber portions 1a and 2a) and backward (on the side of the bare fiber portions 1d and 2d) by use of an automatic stage. The coated fiber clamp 6 and the bare fiber clamp 7 are fixed not to move in the longitudinal direction of the optical fibers, so that the optical fibers is not elongated during the fusion.

After the fusion is completed in a regular time, the tension applying clamps 5 and the bare fiber clamp 7 are removed from the optical fibers, so that the coated fiber portions 3a to 3d and 4a to 4d are clamped by only the coated fiber clamp 6. In this state, the bare fiber portions where the optical fibers for a main line and a branch line are fused are heated by the gas burner 8, so as to be elongated. During the elongating, the distance between the centers of the second and third bare fiber portions 1b and 1c (the same as that between 2b and 2c) is still 2 mm since the coated fiber portions 3a to 3d and 4a to 4d are held by the coated fiber clamp 6. In addition, the gas burner is not reciprocated forward and backward during the elongating.

During the fusing and elongating, light of wavelength 1.3 µm is made incident to one end of an optical fiber for a main line, and the power of output light through the main line optical fiber and its associated branch line optical fiber is monitored by a optical power meter. As the elongating advances, the optical power from the main line optical fiber decreases while the optical power from the branch line optical fiber increases.

By using the optical fiber coupler manufacturing apparatus of this embodiment, optical fiber couplers were manufactured in the following manner.

The elongation was stopped when branch ratio (= (the optical power from the branch line fiber / the sum of optical power from the main line and the branch line) × 100%) became 50% in the first optical fiber. In this case, the branch ratios of the first to fourth optical fiber couplers were all within the range 50±2%. Consequently, it was confirmed that four couplers having uniform characteristics could be manufactured collectively.

In addition to this, in order to confirm the advantage that the distance between the centers of the coated fiber portions 3b and 3c (the same as the distance between 4b and 4c) are made 2mm, such optical fibers were compared with other optical fiber couplers in which the distances therebetween were made 0.25mm and 1.50mm. Generally, in the four-fibers optical fiber ribbon unit, the distances between the adjacent optical fibers are made 0.25mm.

The four-fibers optical fiber ribbon units were manufactured so that distances between the adjacent coated optical fiber portions are made 0.25mm, respectively. Next, three kinds of optical fiber couplers are manufactured by the method as described above. Namely, the centers of the coated fiber portions 3b and 3c (the same as the distance between 4b and 4c) were made 0.25mm, 1.50mm or 2.0mm. Ten optical fiber couplers were manufactured for respective kinds of optical fiber couplers. Then, the saturated insertion loss of branch line (P₂ₘₐₓ)of optical fiber couplers were measured so as to obtain the difference of the saturated insertion loss of branch line (ΔP₂ₘₐₓ) which is the maximum difference among the saturated insertion losses of branch line of optical fiber couplers. As the results of these measurements, the average values of ΔP₂ₘₐₓ of respective kinds of optical fiber couplers were 2.0dB (distance: 0.25mm), 0.4dB (1.50mm) and 0.2dB (2.00mm). Therefore, if the distance between the centers of the coated fiber portions 3b and 3c are made 2mm, the sufficiently uniform characteristics of the optical fiber couplers can be obtained. This is because the burning gas (propane gas and oxygen) can easily flow to the gap between the bare optical fiber portions 1b, 2b and 1c, 2c so that they are heated under the same condition of the bare optical fiber portions 1a, 2a and 1d, 2d.

Further, each tension given by the tension applying clamps 5 is adjusted individually so as to be possible to give a uniform tension to each set of optical fibers. Indeed, the tension is hardly uneven in the embodiment of Fig. 3 where a four-fibers optical fiber ribbon unit is used and separated into two, if the separated optical fibers are disposed symmetrically. But in the case where an eight-fibers optical fiber ribbon unit is used and separated by two fibers, that is, into four, tension becomes uneven between the inner fiber set and the outer fiber set. Accordingly, the method where tension is given individually every fiber set had better be adopted. If tension is given unevenly on purpose, it is also possible to manufacture optical fiber couplers having different characteristics.

Furthermore, as the other embodiment, the gas burner is reciprocated between the points 2 mm forward (on the side of the bare fiber portions 1a and 2a) and 4 mm backward (on the side of the bare fiber portions 1d and 2d) from an origin, which is the middle point of the second and third bare fiber portions 1b and 1c (the same as that of 2b and 2c), by use of an automatic stage.

Optical fiber couplers are manufactured by using the optical fiber coupler manufacturing apparatus of this embodiment. As a result of this manufacturing, the branch ratios of the first and second optical fiber couplers became 50% and 51% respectively, and the branch ratios of the third and fourth optical fiber couplers became 28% and 31% respectively. Accordingly, it was confirmed that the characteristics of respective couplers could be controlled in accordance with the way of moving the gas burner 8.

As for the way of moving the gas burner 8, the speed may be controlled symmetrically or asymmetrically. Alternatively, the change characteristic of the speed in the process of the moving may be selected.

In either way, it goes well if heating effects given to fused portions by the gas burner 8 are made uniform or changed individually. Fusing may be performed either by one movement of the heat source or by a plurality of reciprocations thereof.

## Claims

1. A method for manufacturing optical fiber couplers comprising the steps of:
removing coating over a predetermined section located along the longitudinal direction to expose bare fiber portions of a first optical fiber ribbon unit (3a, b, c, d) including a plurality of arranged optical fibers and a second optical fiber ribbon unit (4a, b, c, d) including arranged optical fibers as many as the optical fibers of said first optical fiber ribbon unit;
heating by heating means (8) said bare fiber portions (1a 2d, 2a 2d) of said first and second optical fiber ribbon units to fuse them while bringing said bare fiber portions in tight contact with each other, and
elongating said fused portions with heating to form a plurality of optical fiber couplers,
**characterized in that**
during the heating of said bare fiber portions the relative positional relationship between said heating means (8) and first and second optical fiber ribbon units (3a 2d; 4a 2d) is varied wherein said heating means (8) is moved in the traverse direction of said optical fiber ribbon unit (3a 2d, 4a 2d) when said bare fiber portions are heated to fuse, and said heating to fuse said bare fiber portions (1a 2d; 2a 2d) is performed in the state where some of the fiber distances of said bare fiber portions of said first and second optical fiber ribbon units are made not less than 1.5mm.

2. The method according to claim 1,
**characterized in that**
said heating means (8) is reciprocated in the traverse directions during heating.

3. The method according to claim 2,
**characterized in that**
the center of the reciprocating motion of said heating means (8) is shifted from the center in the traverse direction of said optical fiber ribbon unit.

4. The method according to claims 2 or 3,
**characterized in that**
the speed of the reciprocating motion of said heating means (8) is varied.

5. The method according to claim 1,
**characterized in that**
said heating means (8) is a gas burner for heating to fuse said bare fiber portions.

6. The method according to claim 1,
**characterized in that**
said elongating with heating is performed under the condition where the fiber distances are the same as those in said heating step.

7. The method according to claims 1 or 6,
**characterized in that**
at least one of said fiber distances between said bare fiber portion (1a-1d; 2a-d) of said first and second optical fiber ribbon units (3a-d; 4a-d) is wider than the original fiber distance of said first and second optical fiber ribbon unit when said heating to fuse said bare fiber portions (1a-d;2a-d) is performed.

8. The method according to claims 1 or 6,
**characterized by**
further comprising the steps of:
before said heating step, splitting said first and second optical fiber ribbon units (3a-d; 4a-d) over a predetermined section located along the longitudinal direction into different groups of coated fibers; and
extending the distances between said separated optical fibers to make at least one of said fiber distances between said bare fiber portions(1a-d;2a-d) of said first and second optical fiber ribbon units wider than the original fiber distance of said first and second optical fiber ribbon units.

9. The method according to claim 7,
**characterized in that**
said fiber distances between said bare fiber portions (1a-d; 2a-d) of said first and second optical fiber ribbon units are extended at every two fibers to be wider than said original fiber distances of said first and second fiber optical fiber ribbon units.

10. The method according to claims 1 or 6,
**characterized by**
further comprising the steps of:
before said heating step, splitting said first and second optical fiber ribbon units (3a-d; 4a-d) over a predetermined section located along the longitudinal direction into different groups of two fibers, and
extending the distances between said separated optical fibers to extend said fiber distances between said bare fiber portions (1a-d;2a-d) of said first and second optical fiber ribbon units at every two fibers to be wider than said original fiber distances of said first and second optical fiber ribbon units.

11. The method according to claims 8 or 10,
**characterized in that**
said heating is performed in a state where individual tensions are applied to individual separated optical fibers.

## Patentansprüche

1. Verfahren zum Herstellen von Lichtleitfaser-Kopplern, das die folgenden Schritte umfasst:
Entfernen von Umhüllung über einen vorgegebenen Abschnitt, der entlang der Längsachse angeordnet ist, um unisolierte Faserteile einer ersten Lichtleitfaserbandeinheit (3a, b, c, d), die eine Vielzahl angeordneter Lichtleitfasern enthält, und einer zweiten Lichtleitfaserbandeinheit (4a, b, c, d), die so viele angeordnete Lichtleitfasern wie die Lichtleitfasern der ersten Lichtleitfaserbandeinheit enthält, freizulegen,
Erhitzen der unisolierten Faserteile (1a 2d, 2a 2d) der ersten und der zweiten Lichtleitfaserbandeinheit mit einer Erhitzungseinrichtung (8), um sie zu verschmelzen, wobei die unisolierten Faserteile in engen Kontakt miteinander gebracht werden, und
Dehnen der verschmolzenen Abschnitte beim Erhitzen, um eine Vielzahl von Lichtleitfaser-Kopplern auszubilden,
**dadurch gekennzeichnet, dass**:
beim Erhitzen der unisolierten Faserteile die relative Positionsbeziehung zwischen der Erhitzungseinrichtung (8) und der ersten sowie der zweiten Lichtleitfaserbandeinheit (3a 2d; 4a 2d) verändert wird, wobei die Erhitzungseinrichtung (8) in der Querrichtung der Lichtleitfaserbandeinheit (3a 2d, 4a 2d) bewegt wird, wenn die unisolierten Faserteile zum Verschmelzen erhitzt werden, und das Erhitzen zum Verschmelzen der unisolierten Faserteile (1a 2d; 2a 2d) in dem Zustand durchgeführt wird, in dem einige der Faserabstände der unisolierten Faserteile der ersten und der zweiten Lichtleitfaserbandeinheit nicht weniger als 1,5 mm betragen.

2. Verfahren nach Anspruch 1, **dadurch gekennzeichnet, dass**:
die Erhitzungseinrichtung (8) beim Erhitzen in den Querrichtungen hin- und herbewegt wird.

3. Verfahren nach Anspruch 2,
**dadurch gekennzeichnet, dass**:
der Mittelpunkt der Hin- und Herbewegung der Erhitzungseinrichtung (8) gegenüber dem Mittelpunkt in der Querrichtung der Lichtleitfaserbandeinheit verschoben ist.

4. Verfahren nach Anspruch 2 oder 3,
**dadurch gekennzeichnet, dass**:
die Geschwindigkeit der Hin- und Herbewegung der Erhitzungseinrichtung (8) verändert wird.

5. Verfahren nach Anspruch 1,
**dadurch gekennzeichnet, dass**:
die Erhitzungseinrichtung (8) ein Gasbrenner für das Erhitzen zum Verschmelzen der unisolierten Faserteile ist.

6. Verfahren nach Anspruch 1,
**dadurch gekennzeichnet, dass**:
das Dehnen beim Erhitzen unter der Bedingung durchgeführt wird, dass die Faserabstände die gleichen sind wie beim Erhitzungsschritt.

7. Verfahren nach Anspruch 1 oder 6,
**dadurch gekennzeichnet, dass**:
wenigstens einer der Faserabstände zwischen dem unisolierten Faserteil (1a-1d; 2a-d) der ersten und der zweiten Lichtleitfaserbandeinheit (3a-c; 4a-d) größer ist als der ursprüngliche Faserabstand der ersten und der zweiten Lichtleitfaserbandeinheit, wenn das Erhitzen zum Verschmelzen der unisolierten Faserabschnitte (1a-d; 2a-d) durchgeführt wird.

8. Verfahren nach den Ansprüchen 1 oder 6,
**gekennzeichnet dadurch, dass** es des Weiteren die folgenden Schritte umfasst:
vor dem Erhitzungsschritt Aufspalten der ersten und der zweiten Lichtleitfaserbandeinheit (3a-d; 4a-d) über einen vorgegebenen Abschnitt, der entlang der Längsachse angeordnet ist, in zwei verschiedene Gruppen umhüllter Fasern; und
Vergrößern der Abstände zwischen den getrennten Lichtleitfasern, um wenigstens einen der Faserabstände zwischen den unisolierten Faserteilen (1a-d; 2a-d) der ersten und der zweiten Lichtleitfaserbandeinheit größer zu machen als den ursprünglichen Faserabstand der ersten und der zweiten Lichtleitfaserbandeinheit.

9. Verfahren nach Anspruch 7,
**dadurch gekennzeichnet, dass**:
die Faserabstände zwischen den unisolierten Faserteilen (1a-d; 2a-d) der ersten und der zweiten Lichtleitfaserbandeinheiten bei allen zwei Fasern so vergrößert werden, dass sie größer sind als die ursprünglichen Faserabstände der ersten und der zweiten Lichtleitfaserbandeinheit.

10. Verfahren nach Anspruch 1 oder 6,
**dadurch gekennzeichnet, dass** es des Weiteren die folgenden Schritte umfasst:
vor dem Erhitzungsschritt Aufspalten der ersten und der zweiten Lichtleitfaserbandeinheit (3a-d; 4a-d) über einen vorgegebenen Abschnitt, der entlang der Längsrichtung angeordnet ist, in zwei verschiedene Gruppen von zwei Fasern, und
Vergrößern der Abstände zwischen den getrennten Lichtleitfasern, um die Faserabstände zwischen den unisolierten Faserteilen (1a-d; 2a-d) der ersten und der zweiten Lichtleitfaserbandeinheit an allen zwei Fasern zu vergrößern, so dass sie größer sind als die ursprünglichen Faserabstände der ersten und der zweiten Lichtleitfaserbandeinheit.

11. Verfahren nach Anspruch 8 oder 10,
**dadurch gekennzeichnet, dass**:
das Erhitzen in einem Zustand durchgeführt wird, in dem individuelle Spannungen auf individuelle getrennte Lichtleitfasern ausgeübt werden.

## Revendications

1. Procédé de fabrication de coupleurs à fibres optiques, comprenant les étapes consistant à :
retirer le revêtement sur une section prédéterminée située suivant la direction longitudinale pour exposer des parties de fibre nue d'une première unité de ruban de fibres optiques (3a, b, c, d) comprenant une pluralité de fibres optiques agencées et d'une deuxième unité de ruban de fibres optiques (4a, b, c, d) comprenant autant de fibres optiques agencées que le nombre de fibres optiques de ladite première unité de ruban de fibres optiques ;
chauffer par des moyens de chauffage (8) lesdites parties de fibre nue (1a 2d, 2a 2d) desdites première et deuxième unités de ruban de fibres optiques pour les fusionner tout en amenant lesdites parties de fibre nue en contact étroit les unes avec les autres ; et
allonger lesdites parties fusionnées par chauffage pour former une pluralité de coupleurs à fibres optiques ;
**caractérisé en ce que**
pendant le chauffage desdites parties de fibre nue, la relation de positionnement relatif entre lesdits moyens de chauffage (8) et les première et deuxième unités de ruban de fibres optiques (3a 2d ; 4a 2d) est modifiée, lesdits moyens de chauffage (8) étant déplacés dans la direction transversale de ladite unité de ruban de fibres optiques (3a 2d, 4a 2d) quand lesdites parties de fibre nue sont chauffées pour fusionner, et ledit chauffage pour fusionner lesdites parties de fibre nue (1a 2d ; 2a 2d) est effectué à l'état où certaines des distances de fibres desdites parties de fibre nue desdites première et deuxième unités de ruban de fibres optiques sont amenées à ne pas être inférieures à 1,5 mm.

2. Procédé selon la revendication 1, **caractérisé en ce que** lesdits moyens de chauffage (8) sont déplacés en alternance dans les directions transversales pendant le chauffage.

3. Procédé selon la revendication 2, **caractérisé en ce que** le centre du mouvement alternatif desdits moyens de chauffage (8) est décalé par rapport au centre dans la direction transversale de ladite unité de ruban de fibres optiques.

4. Procédé selon la revendication 2 ou 3, **caractérisé en ce que** la vitesse du mouvement alternatif desdits moyens de chauffage (8) est modifiée.

5. Procédé selon la revendication 1, **caractérisé en ce que** lesdits moyens de chauffage (8) sont un brûleur à gaz pour le chauffage afin de fusionner lesdites parties de fibre nue.

6. Procédé selon la revendication 1, **caractérisé en ce que** ledit allongement avec chauffage est effectué à condition que les distances de fibres soient identiques à celles de ladite étape de chauffage.

7. Procédé selon la revendication 1 ou 6, **caractérisé en ce qu'**au moins l'une desdites distances de fibres entre ladite partie de fibre nue (1a-1d ; 2a-d) desdites première et deuxième unités de ruban de fibres optiques (3a-d ; 4a-d) est plus large que la distance de fibres d'origine desdites première et deuxième unités de ruban de fibres optiques quand ledit chauffage pour fusionner lesdites parties de fibre nue (1a-d ; 2a-d) est effectué.

8. Procédé selon la revendication 1 ou 6, **caractérisé en ce qu'**il comprend en outre les étapes consistant à :
avant ladite étape de chauffage, diviser lesdites première et deuxième unités de ruban de fibres optiques (3ad ; 4a-d) sur une section prédéterminée située suivant la direction longitudinale en différents groupes de fibres enrobées ; et
étendre les distances entre lesdites fibres optiques séparées pour rendre au moins l'une desdites distances de fibres entre lesdites parties de fibre nue (1a-d ; 2a-d) desdites première et deuxième unités de ruban de fibres optiques plus large que la distance de fibres d'origine desdites première et deuxième unités de ruban de fibres optiques.

9. Procédé selon la revendication 7, **caractérisé en ce que** lesdites distances de fibres entre lesdites parties de fibre nue (1a-d ; 2a-d) desdites première et deuxième unités de ruban de fibres optiques sont étendues une fibre sur deux pour être plus larges que lesdites distances de fibres d'origine desdites première et deuxième unités de ruban de fibres optiques.

10. Procédé selon la revendication 1 ou 6, **caractérisé en ce qu'**il comprend en outre les étapes consistant à :
avant ladite étape de chauffage, diviser lesdites première et deuxième unités de ruban de fibres optiques (3ad ; 4a-d) sur une section prédéterminée située suivant la direction longitudinale en différents groupes de deux fibres ; et
étendre les distances entre lesdites fibres optiques séparées pour étendre lesdites distances de fibres entre lesdites parties de fibre nue (1a-d ; 2a-d) desdites première et deuxième unités de ruban de fibres optiques une fibre sur deux pour qu'elles soient plus larges que les distances de fibres d'origine desdites première et deuxième unités de ruban de fibres optiques.

11. Procédé selon la revendication 8 ou 10, **caractérisé en ce que** ledit chauffage est effectué dans un état où des tensions individuelles sont appliquées à des fibres optiques séparées individuelles.
